# FASCICULE DE BREVET EUROPEEN

(11) **EP 0 938 421 B1**
(45) Date de publication et mention de la délivrance du brevet: **16.10.2002**
(21) Numéro de dépôt: 97945927.8
(22) Date de dépôt: 14.11.1997
(51) Int. Cl.: B60K 26/02

(54) **DISPOSITIF D'IMMOBILISATION D'UNE PEDALE D'ACCELERATEUR ET PROCEDE D'AIDE A LA CONDUITE CORRESPONDANT**
VORRICHTUNG ZUR FESTSETZUNG EINES GASPEDALS UND ENTSPRECHENDES FAHRHILFEVERFAHREN
DEVICE FOR IMMOBILISING THE ACCELERATOR PEDAL AND CORRESPONDING METHOD FOR DRIVING ASSISTANCE

(30) Priorité: 15.11.1996 FR 9613944
(43) Date de publication de la demande: 01.09.1999
(73) Titulaire: Renault s.a.s., 92100 Boulogne Billancourt (FR)
(72) Inventeur: BAERD, Sébastien, F-75015 Paris (FR); FAURE, Robert, F-92350 Le Plessis Robinson (FR); TOFFOLO, Gabriel, F-92500 Rueil Malmaison (FR)
(86) Numéro de dépôt international: FR9702048
(87) Numéro de publication internationale: WO98022303

(56) Documents cités:
- DE-A- 4 241 805
- FR-A- 2 356 007
- FR-A- 2 444 163
- FR-A- 2 460 224
- FR-A- 2 647 568
- FR-A- 2 728 835

## Description

La présente invention se rapporte au domaine de l'aide à la conduite des véhicules routiers. Plus précisément, elle concerne un dispositif permettant l'immobilisation de la pédale d'accélérateur d'un véhicule dans une situation inactive où l'organe d'admission du moteur est placé directement sous le contrôle du calculateur d'un système d'aide à la conduite embarqué.

Sur les véhicules équipés de systèmes d'aide à la conduite, tels qu'un régulateur automatique de vitesse ou de distance prenant en charge le contrôle de l'organe d'admission des gaz du moteur lorsqu'il est mis en service, la pédale d'accélérateur devient momentanément inutile, de sorte que le conducteur n'est plus tenu de maintenir son pied droit sur celle-ci, et peut rechercher d'autres positions d'appui plus confortables. En situation d'urgence, lorsque il cherche à reprendre le contrôle de la fonction d'accélération, le conducteur doit cependant replacer son pied sur la pédale le plus rapidement possible.

Dans ces circonstances, le temps de replacement du pied droit sur la pédale d'accélérateur pose un problème de sécurité, lié à l'éloignement de la position de repos choisie, et d'autre part aux hésitations éventuelles du conducteur pour retrouver sa pédale. Pour supprimer ce problème de replacement, l'activation du système de régulation s'accompagne sur certains véhicules de la formation d'un point dur sur la course de la pédale d'accélérateur, offrant au conducteur une position de repos pour son pied droit.

Par la publication FR 2.356.007, on connaît notamment une pédale d'accélérateur offrant une position d'appui intermédiaire, grâce à l'augmentation du tarage de son ressort de rappel sur son dernier tiers. Etant donné que cette position correspond à la vitesse de croisière du véhicule, le conducteur dispose sur sa pédale d'un repère lui permettant de conserver facilement cette vitesse, et de la dépasser, sans devoir replacer son pied. L'enfoncement de la pédale au-delà du point dur exige cependant un effort trop important pour être maintenu.

La publication FR 2.460.224, au nom de la demanderesse, propose de bloquer la pédale d'accélérateur dans une position particulière en excitant un électroaimant, de façon à pouvoir conserver sans difficulté une vitesse de croisière. A cet effet, la course de la pédale est étalonnée automatiquement en fonction de la vitesse choisie, si bien que le conducteur rencontre également un point dur en fin de course, quelle que soit la vitesse de consigne du véhicule. Comme dans le cas précédent, ces mesures imposent toutefois au conducteur un effort particulier sur la pédale pour rouler au-delà de la vitesse de croisière avant d'avoir pu supprimer ou modifier manuellement la valeur de celle-ci.

Selon une autre disposition connue, illustrée notamment par la publication FR 2.444.163, il est possible de limiter simplement le régime du moteur en introduisant dans la timonerie de la commande d'accélération un organe de rappel, destiné à stabiliser la vitesse du véhicule sans possibilité de dépasser celle-ci à l'aide la pédale. En variante, ce document prévoit cependant la possibilité de dépasser la vitesse de régulation, mais au prix d'un effort musculaire trop élevé pour pouvoir maintenir une vitesse supérieure à la consigne.

De nombreuses publications, telles que la publication DE-4.241.805, qui comporte les caractéristiques du préambule de la revendication 1, prévoient également d'imposer un effort supplémentaire sur la pédale au-delà d'une vitesse de croisière préétablie. Selon ce document, le conducteur rencontre en effet une résistance supérieure sur la fin de la course de la pédale. Toutefois, les mesures proposées ne permettent pas au conducteur de retrouver des conditions de conduite normale, lorsqu'il a passé le point dur de la pédale d'accélérateur.

La présente invention vise à faciliter la mise hors service momentanée ou définitive d'un système d'aide à la conduite de véhicule routier.

Elle propose dans ce but un dispositif d'immobilisation d'une pédale d'accélérateur dans une situation inactive où l'organe de commande de l'admission des gaz est placé directement sous le contrôle du calculateur d'un système d'aide à la conduite embarqué à bord du véhicule. Ce dispositif comporte un élément mobile relié à la pédale, qui est déplacé par celle-ci entre une première position d'immobilisation de la pédale dans sa situation inactive conservée tant que la poussée du conducteur sur la pédale reste inférieure à un seuil d'effort préétabli, et une seconde position de mise hors service du système d'aide à la conduite, rejointe dès que le seuil d'effort est dépassé, où la pédale ne présente pas de résistance particulière, qui est conservée, tant que le système d'aide à la conduite reste hors service.

De préférence, le dispositif immobilise la pédale dans sa position haute, et l'élément mobile retrouve sa position d'immobilisation dès que la pédale retrouve sa position haute.

Le dispositif proposé est utilisable sur un véhicule à papillon des gaz mécanique ou motorisé.

Le système d'aide à la conduite du véhicule peut notamment être un système de régulation automatique de vitesse, associé ou non à des moyens de régulation en distance.

Selon un premier mode de réalisation de l'invention, l'élément mobile se déplace devant une bille repoussée contre lui par l'électroaimant lorsque ce dernier est alimenté, et il présente une gorge recevant dans cette situation la bille sous la poussée d'un ressort lorsque l'élément mobile rejoint sa première position, de sorte que le seuil d'effort est déterminé par la poussée du ressort sur la bille.

Selon un second mode de réalisation de l'invention, l'élément mobile constitue le noyau conique d'un électroaimant dont la force d'attraction détermine le seuil d'effort à dépasser pour quitter la première position.

L'invention concerne également un procédé d'aide à la conduite d'un véhicule routier équipé d'un dispositif d'immobilisation de sa pédale d'accélérateur. Selon ce procédé, le calculateur, échange des informations avec au moins un capteur de vitesse de roue, un capteur de position de pédale d'accélérateur, une interface conducteur de mise en service ou hors service du système d'aide à la conduite, le dispositif d'immobilisation en question, et l'organe de commande d'admission du moteur.

D'autres caractéristiques et avantages de l'invention ressortiront clairement à la lecture de la description suivante de l'invention, en se reportant aux dessins annexés, sur lesquels :
- la figure 1 met en évidence les principales liaisons fonctionnelles du mises en oeuvre pour réaliser l'invention,
- les figures 2A à 2C illustrent un premier mode de réalisation du dispositif proposé,
- les figures 3A à 3C illustrent un second mode de réalisation,
- les figures 4A à 4D, illustrent un troisième mode de réalisation, et
- les figures 5A à 5C illustrent un quatrième mode de réalisation de celui-ci.

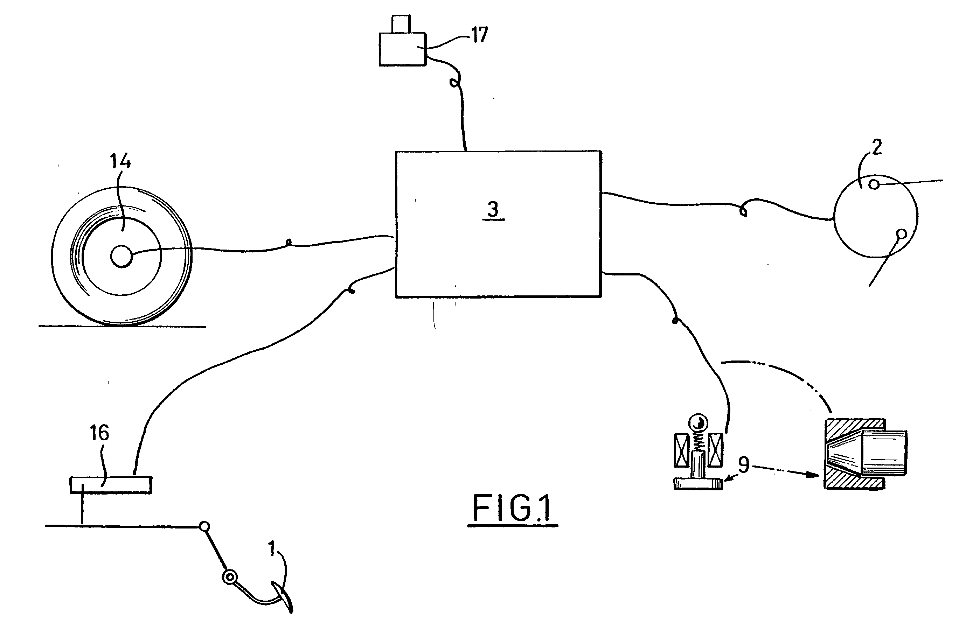

Le schéma de câblage illustré par la figure 1 fait apparaître en position centrale une unité de calcul 3 qui gère d'une part la commande du papillon d'admission des gaz 2 ou de tout autre type d'organe de commande de fonctionnement du moteur, et d'autre part l'activation de l'électroaimant 9 du dispositif d'immobilisation de la pédale d'accélérateur proposé par l'invention. Cette unité 3 reçoit notamment des informations de capteurs de vitesse de roue 14, d'un capteur de position de la pédale d'accélérateur 16, et d'une commande manuelle 17 de mise en service ou hors service d'un système d'aide à la navigation embarqué, tel qu'un régulateur de vitesse associé ou non à des moyens de régulation de la distance vis-à-vis du véhicule précédent.

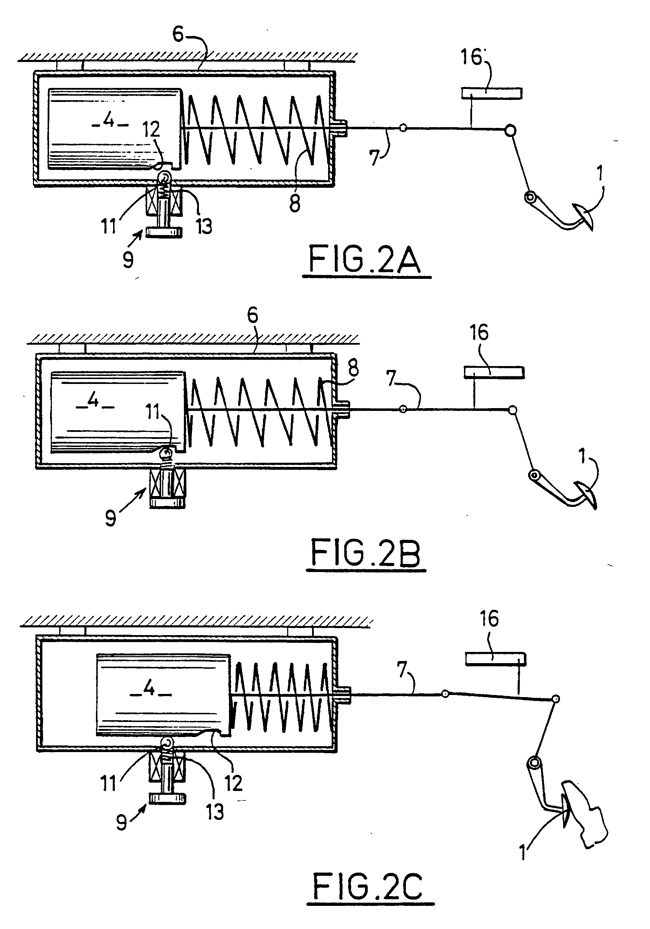

Sur les figures 2A à 5C, on a représenté schématiquement une pédale d'accélérateur 1, reliée par un câble d'accélérateur 7 à un premier élément 4 mobile à l'intérieur d'un second élément 6 assimilable à une cage, fixe par rapport au châssis du véhicule. Conformément à l'invention, l'élément mobile 4 se déplace vis-à-vis de l'élément fixe 6, sous les actions antagonistes du câble 7 et d'un ressort 8 rappelant cet élément dans une première position correspondant à la position haute de la pédale 1.

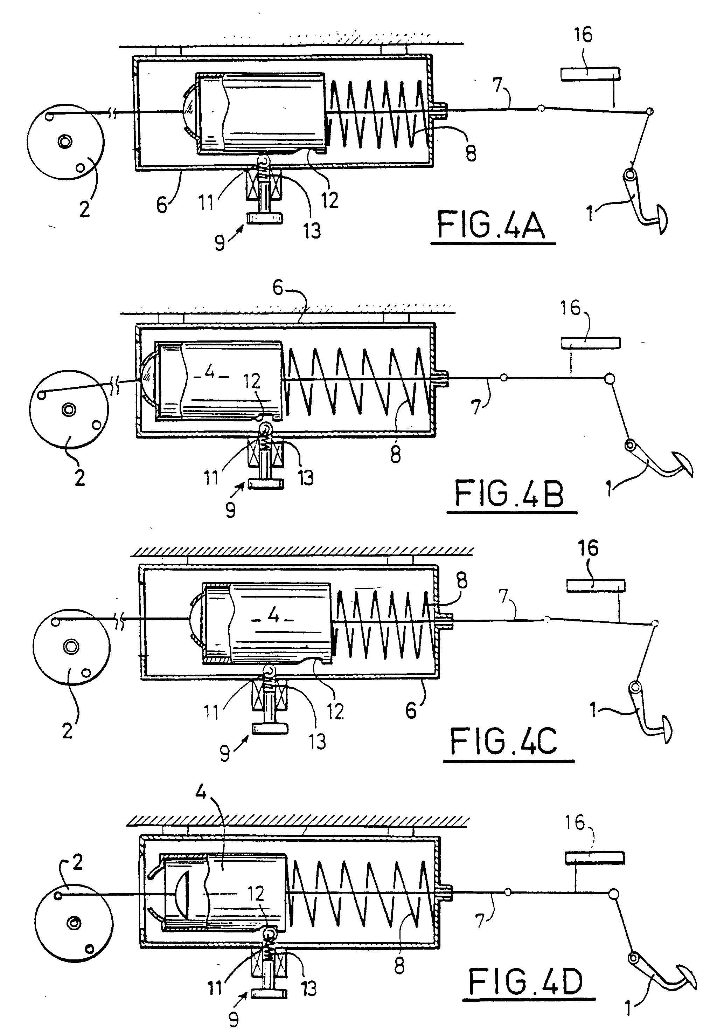

Les deux premiers modes de réalisation illustrés (cf. figures 2A à 3D), sont applicables sur un véhicule à papillon d'admission des gaz motorisé, c'est à dire un véhicule où l'information de position de la pédale d'accélérateur parvient au papillon par l'intermédiaire d'un calculateur, car il n'existe pas de liaison mécanique entre la pédale et le câble. En revanche, les deux derniers modes (cf. figures 4A à 5C) concernent un véhicule à "papillon mécanique", sur lequel le dispositif proposé constitue une interface mécanique entre la pédale et le papillon.

En se reportant aux figures 2A à 2C, on voit que l'élément fixe porte un électroaimant repoussant lorsqu'il est excité (cf. figures 2B et 2C) une bille 11 contre l'élément mobile 4, par l'intermédiaire d'un second ressort 13. Par ailleurs celui-ci présente une gorge périphérique placée en face de la bille lorsque cet élément est dans une première position qui correspond à la position de butée haute de la pédale 1.

Le fonctionnement de ce dispositif est le suivant. Lorsque le moteur du véhicule est au ralenti, la pédale 1 est tirée en position haute par le câble 7. Si le système de régulation de vitesse est hors service, l'électroaimant n'est pas alimenté (cf. figure 2A), de sorte que l'élément mobile 4 est libre de se déplacer à l'intérieur de l'élément fixe 6 lorsque le conducteur appuie sur sa pédale 1. Celle-ci est alors normale, et ne présente pas de résistance particulière à l'enfoncement.

En mode de régulation de vitesse, l'électroaimant est alimenté et pousse la bille contre l'élément fixe par l'intermédiaire du second ressort 13. Si la pédale 1 est en position haute (cf. figure 2B), la bille 11 vient se loger dans la gorge périphérique 12 de l'élément mobile 4. Ce dernier est alors immobilisé en translation, de sorte que la pédale 1 est immobilisée en position haute. Dans ces conditions, le conducteur peut caler son pied droit sur la pédale, qui lui sert alors de repose-pied.

S'il souhaite dépasser sa vitesse de croisière, ou tout simplement reprendre le contrôle de celle-ci, il lui suffit d'exercer sur la pédale une force supérieure à l'effort de seuil prédéterminé par le tarage du second ressort 13. Lorsque le point dur, correspondant à l'éjection de la bille 11 hors de la gorge 12 est dépassé, la pédale 1 ne présente plus de résistance particulière, si bien que le conducteur retrouve un usage normal de celle-ci.

Sans sortir du cadre de l'invention, on peut prévoir que l'électroaimant soit désactivé par le dépassement du point dur, de façon à mettre systématiquement hors service la régulation de vitesse après ce dépassement, ou au contraire que l'électroaimant ne soit pas désactivé, pour que la bille 11 s'engage à nouveau dans la gorge 12 dès que la pédale 1 est relâchée et que le véhicule retrouve ainsi automatiquement le mode de régulation de vitesse.

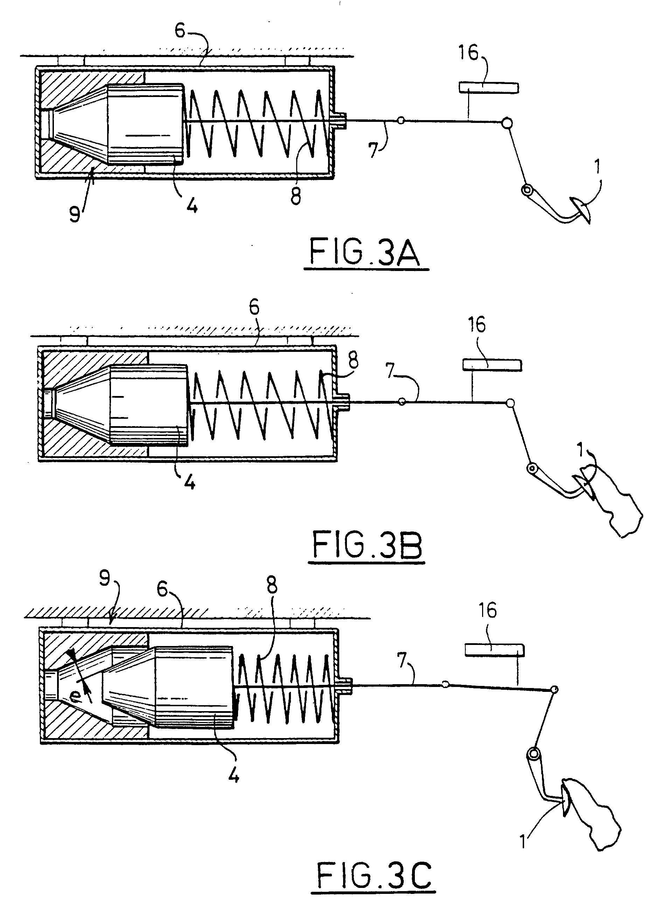

Selon un second mode de réalisation, illustré par les figures 3A, 3B et 3C, l'élément fixe et l'élément mobile 4 constituent respectivement le corps et le noyau conique d'un électroaimant 9, du type "à noyau plongeur", dont la force d'attraction relative détermine le seuil d'effort à dépasser pour quitter la première position. Comme précédemment, le premier ressort 8 rappelle en permanence l'élément mobile 4 au fond de l'élément fixe 6 à l'encontre de la traction du câble d'accélérateur 7. Par ailleurs, l'enfoncement de la pédale 1 fait coulisser l'élément mobile 4 sur toute sa course en faisant varier la distance de l'entrefer "e" de l'électroaimant 9. Enfin, la forme conique de cet entrefer permet de maîtriser la courbe de la force d'attraction électromagnétique de l'électroaimant, en fonction de l'épaisseur de cet entrefer "e".

Lorsque l'électroaimant 9 n'est pas alimenté (cf. figures 3A), le système d'aide à la conduite est hors service, et la pédale 1 ne présente pas de résistance particulière pour quitter sa position de ralenti ou pour évoluer sur l'ensemble de sa course.

Dès que l'électroaimant est alimenté (cf. figures 3B et 3C), c'est-à-dire en mode de régulation de vitesse, l'élément mobile 4 est attiré par l'élément fixe 6. Le conducteur peut alors caler son pied sur la pédale d'accélérateur 1 (cf. figure 3B) sans l'enfoncer, et le câble d'accélérateur est tendu. Si le conducteur souhaite dépasser sa vitesse de croisière, il doit appliquer sur la pédale une force supérieure au seuil d'effort défini par l'électroaimant, de manière à dégager l'élément mobile 4 de l'élément 6 (cf. figure 3C).

Conformément à l'invention, le conducteur retrouve alors l'usage normal de sa pédale d'accélérateur, qui ne présente plus de résistance particulière à l'enfoncement. En effet, la structure de l'électroaimant 9 est telle que dès, le décollement des deux éléments 4, 6, leur force d'attraction mutuelle diminue très rapidement, de sorte que la résistance de la pédale disparaît après le dépassement du point dur.

Comme pour le premier mode de réalisation, l'invention prévoit que le dépassement du point dur entraîne soit la mise hors service du système d'aide à la conduite, soit sa remise en service systématique dès que la pédale retrouve sa position haute. A cet égard, il suffit simplement de décider si ce dépassement entraîne ou non la coupure automatique de l'alimentation de l'électroaimant.

Comme indiqué plus haut, les deux derniers modes de réalisation (cf. figures 4A à 5C) concernent un véhicule à papillon mécanique, sur lequel le dispositif d'immobilisation de la pédale d'accélérateur constitue une interface mécanique entre la pédale et le papillon d'admission des gaz.

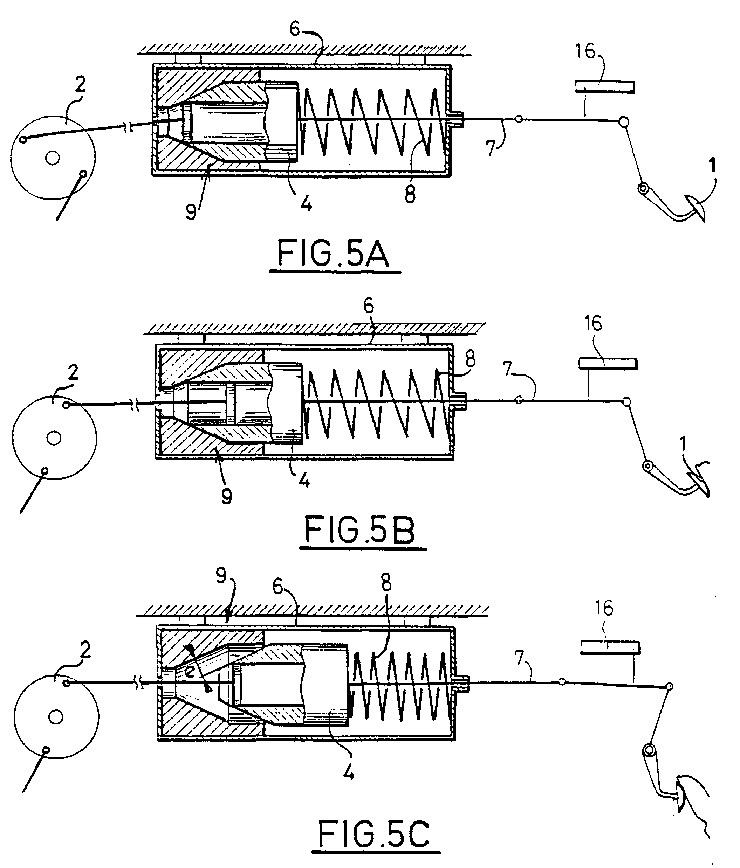

En se reportant aux figures 4A à 4D, on voit qu'elles présentent le même type d'électroaimant à bille que les figures 2A à 2C, et que les figures 5A à 5C présentent le même type d'électroaimant à noyau plongeur que les figures 3A à 3C. De fait, le troisième et le quatrième mode de réalisation décrits se distinguent uniquement du premier et du second, en ce que l'élément mobile 4 du dispositif d'immobilisation, relié à la pédale 1, est par ailleurs relié mécaniquement à un organe d'actionnement 2 du moteur.
Dans tous les cas, l'invention permet d'immobiliser la pédale d'accélérateur, lorsque le véhicule est en mode de régulation de vitesse, et accessoirement, de distance, pour que le conducteur dispose d'un repose-pied lui permettant de reprendre instantanément le contrôle de sa vitesse en retrouvant une pédale d'accélération normale. Par ailleurs, elle permet de régler le seuil d'effort à appliquer sur la pédale pour dépasser son point dur en choisissant de façon appropriée le tarage du ressort de l'électroaimant à bille ou la force électromagnétique de l'électroaimant à noyau conique. Enfin, le procédé d'aide à la conduite mis en oeuvre par l'invention autorise, selon la stratégie adoptée, une mise hors service des moyens de régulation d'allure à chaque dépassement du point dur, ou une remise automatique en service de ces derniers, lorsque la pédale rejoint sa position de butée haute.

## Revendications

1. Dispositif d'immobilisation d'une pédale d'accélérateur (1) dans une situation inactive où l'organe de commande de l'admission des gaz (2) est placé directement sous le contrôle du calculateur (3) d'un système d'aide à la conduite embarqué à bord du véhicule, comportant un élément mobile (4) relié à la pédale (1), qui est déplacé par celle-ci entre une première position d'immobilisation de la pédale dans sa situation inactive conservée tant que la poussée du conducteur sur la pédale reste inférieure à un seuil d'effort préétabli, et une seconde position rejointe dès que le seuil d'effort est dépassé, **caractérisé en ce que** la dite seconde position est une position de mise hors service du système d'aide à la conduite où la pédale ne présente pas de résistance particulière, qui est conservée tant que le système d'aide à la conduite reste hors service.

2. Dispositif d'immobilisation selon la revendication 1, **caractérisé en ce que** la pédale (1) est immobilisée dans sa position haute.

3. Dispositif d'immobilisation selon la revendication 1 ou 2, **caractérisé en ce que** l'élément mobile (4) retrouve sa première position dès que la pédale (1) retrouve sa position haute.

4. Dispositif d'immobilisation selon la revendication 1 ou 2, **caractérisé en ce que** l'élément mobile (4) retrouve sa première position lorsque le conducteur remet le système d'aide à la conduite en service.

5. Dispositif d'immobilisation selon l'une des revendications précédentes, **caractérisé en ce qu'**il est relié mécaniquement à un organe d'actionnement du moteur (2).

6. Dispositif d'immobilisation selon l'une des revendications précédentes, **caractérisé en ce que** l'élément mobile (4) se déplace vis-à-vis d'un élément fixe (6) sous les actions antagonistes du câble d'accélérateur (7) et d'un premier ressort (8) de rappel vers sa première position.

7. Dispositif d'immobilisation selon l'une des revendications précédentes, **caractérisé en ce que** l'élément mobile (4) coopère avec un éléctroaimant (9) alimenté électriquement lorsque le système d'aide à la conduite est en service.

8. Dispositif d'immobilisation selon la revendication 7, **caractérisé en ce que** l'élément mobile (4) se déplace devant une bille (11) repoussée contre lui par l'électroaimant (9) lorsque ce dernier est alimenté, et présente une gorge (12) recevant alors la bille sous la poussée d'un second ressort (13) lorsque l'élément mobile rejoint sa première position, de sorte que le seuil d'effort est déterminé par la poussée du second ressort (13) sur la bille (11).

9. Dispositif d'immobilisation selon l'une des revendications 1 à 6, **caractérisé en ce que** l'élément fixe (6) et l'élément mobile (4) constituent respectivement le corps et le noyau conique d'un électroaimant (9) dont la force d'attraction relative détermine le seuil d'effort à dépasser pour quitter la première position.

10. Procédé d'aide à la conduite d'un véhicule routier équipé d'un dispositif conforme à l'une des revendications précédentes, **caractérisé en ce que** le calculateur (2), échange des informations avec au moins un capteur de vitesse de roue (11), un capteur de position de pédale d'accélérateur (16), une interface conducteur (17) de mise en service ou hors service du système d'aide à la conduite, le dispositif d'immobilisation en question, et l'organe de commande d'actionnement du moteur (2).

11. Procédé d'aide à la conduite d'un véhicule routier équipé d'un dispositif conforme à l'une des revendications 1 à 9, **caractérisé en ce que** l'immobilisation de la pédale (1) permet au calculateur (3) de réguler automatiquement la vitesse du véhicule.

12. Procédé d'aide à la conduite selon la revendication 11, **caractérisé en ce que** le calculateur (3) régule la distance vis-à-vis du véhicule par rapport au véhicule précédent.

## Patentansprüche

1. Vorrichtung zur Immobilisierung eines Gaspedals (1) in einer inaktiven Situation, in der sich das Steuerungsorgan des Gaseinlasses (2) direkt unter der Kontrolle des Rechners (3) eines an Bord des Fahrzeugs mitgeführten Lenkhilfesystems befindet, umfassend ein bewegliches Element (4), das mit dem Pedal verbunden ist (1) und durch dieses bewegt wird zwischen einer ersten Position der Immobilisierung des Pedals in seiner inaktiven Situation, die beibehalten wird, so lange der Druck des Lenkers auf das Pedal unter einer vorbestimmten Kraftschwelle bleibt, und einer zweiten Position, die erreicht wird, sobald die Kraftschwelle überschritten wird, **dadurch gekennzeichnet, dass** die zweite Position eine Position der Außerkraftsetzung des Lenkhilfesystems ist, in der das Pedal keinen besonderen Widerstand bietet, die beibehalten wird, so lange das Lenkhilfesystem außer Betrieb bleibt.

2. Vorrichtung zur Immobilisierung nach Anspruch 1, **dadurch gekennzeichnet, dass** das Pedal (1) in seiner oberen Position immobilisiert wird.

3. Vorrichtung zur Immobilisierung nach Anspruch 1 oder 2, **dadurch gekennzeichnet, dass** das bewegliche Element (4) wieder in seine erste Position gelangt, sobald das Pedal (1) wieder in seine obere Position gelangt.

4. Vorrichtung zur Immobilisierung nach Anspruch 1 oder 2, **dadurch gekennzeichnet, dass** das bewegliche Element (4) wieder in seine erste Position gelangt, wenn der Lenker das Lenkhilfesystem wieder in Betrieb setzt.

5. Vorrichtung zur Immobilisierung nach einem der vorhergehenden Ansprüche, **dadurch gekennzeichnet, dass** sie mechanisch mit einem Betätigungsorgan des Motors (2) verbunden ist.

6. Vorrichtung zur Immobilisierung nach einem der vorhergehenden Ansprüche, **dadurch gekennzeichnet, dass** sich das bewegliche Element (4) gegenüber einem fixen Element (6) unter den gegenwirkenden Einwirkungen des Gaszuges (7) und einer ersten Feder (8) zur Rücksetzung in seine erste Position bewegt.

7. Vorrichtung zur Immobilisierung nach einem der vorhergehenden Ansprüche, **dadurch gekennzeichnet, dass** das bewegliche Element (4) mit einem Elektromagneten (9) zusammenarbeitet, der elektrisch gespeist wird, wenn das Lenkhilfesystem in Betrieb ist.

8. Vorrichtung zur Immobilisierung nach Anspruch 7, **dadurch gekennzeichnet, dass** sich das bewegliche Element (4) vor einer Kugel (11) bewegt, die durch den Elektromagneten (9) gegen es gedrückt wird, wenn der letztgenannte gespeist wird, und eine Vertiefung (12) aufweist, die die Kugel unter dem Druck einer zweiten Feder (13) aufnimmt, wenn das bewegliche Element seine erste Position erreicht, so dass die Kraftschwelle durch den Druck der zweiten Feder (13) auf die Kugel (11) bestimmt wird.

9. Vorrichtung zur Immobilisierung nach einem der Ansprüche 1 bis 6, **dadurch gekennzeichnet, dass** das fixe Element (6) und das bewegliche Element (4) den Körper bzw. den konischen Kern eines Elektromagneten (9) bilden, dessen relative Anziehungskraft die Kraftschwelle bestimmt, die zu überschreiten ist, um die erste Position zu verlassen.

10. Verfahren zur Lenkhilfe für ein Straßenfahrzeug, das mit einer Vorrichtung nach einem der vorhergehenden Ansprüche ausgestattet ist, **dadurch gekennzeichnet, dass** der Rechner (3) Informationen mit mindestens einem Radgeschwindigkeitssensor (11), einem Gaspedalpositionssensor (16), einer Lenkerschnittstelle (17) zur Inbetriebsetzung oder Außerbetriebsetzung des Lenkhilfesystems, der fraglichen Immobilisierungsvorrichtung und dem Betätigungssteuerungsorgan des Motors (2) austauscht.

11. Verfahren zur Lenkhilfe für ein Straßenfahrzeug, das mit einer Vorrichtung nach einem der Ansprüche 1 bis 9 ausgestattet ist, **dadurch gekennzeichnet, dass** die Immobilisierung des Pedals (1) es dem Rechner (3) ermöglicht, die Geschwindigkeit des Fahrzeugs automatisch zu regulieren.

12. Verfahren zur Lenkhilfe nach Anspruch 11, **dadurch gekennzeichnet, dass** der Rechner (3) den Abstand gegenüber dem Fahrzeug in Bezug auf das vorhergehende Fahrzeug reguliert.

## Claims

1. Device for immobilising an accelerator pedal (1) in a situation of inactivity where the mechanism for controlling the engine intake (2) is placed directly under the control of the computer (3) of a system for assisting driving, onboard the vehicle, comprising a moveable element (4) connected to the pedal (1), that is displaced thereby between a first position of immobilising the pedal in its inactive situation, maintained as long as the pressure of the driver on the pedal remains less than a pre-established threshold of force, and a second, position returned to once the threshold of force is exceeded, **characterised in that** said second position is a position of taking the system for assisting driving out of service, where the pedal does not have any particular resistance, which is maintained as long as the system for assisting driving remains out of service.

2. Device for immobilising according to claim 1, **characterised in that** the pedal (1) is immobilised in its upper position.

3. Device for immobilising according to claim 1 or 2, **characterised in that** the moveable element (4) returns to its first position once the pedal (1) returns to its upper position.

4. Device for immobilising according to claim 1 or 2, **characterised in that** the moveable element (4) returns to its first position when the driver puts the system for assisting driving into service.

5. Device for immobilising according to one of the preceding claims, **characterised in that** it is mechanically connected to a mechanism for operating the engine (2).

6. Device for immobilising according to one of the preceding claims, **characterised in that** the moveable element (4) moves with respect to a fixed element (6) due to the antagonistic actions of the accelerator cable (7) and a first spring (8) for returning it to its first position.

7. Device for immobilising according to one of the preceding claims, **characterised in that** the moveable element (4) cooperates with an electrically energised electromagnet (9) when the system for assisting driving is in service.

8. Device for immobilising according to claim 7, **characterised in that** the moveable element (4) moves in front of a ball (11) pushed against it by the electromagnet (9) when the latter is energised, and has a throat (12) receiving the ball under pressure from a second spring (13) when the moveable element returns to its first position, such that the threshold of force is determined by the pressure of the second spring (13) on the ball (11).

9. Device for immobilising according to one of claims I to 6, **characterised in that** the fixed element (6) and the moveable element (4) respectively constitute the body and the conical core of an electromagnet (9) the relative force of attraction of which determines the threshold of force to be exceeded in order to leave the first position.

10. Method for assisting driving of a road vehicle fitted with a device according to one of the preceding claims, **characterised in that** the computer (2) exchanges data with at least a wheel speed sensor (11), an accelerator pedal position sensor (16), a driver interface (17) for putting into service or taking out of service the system for assisting driving, the immobilising device in question, and the mechanism for controlling operation of the engine (2).

11. Method for assisting driving of a road vehicle fitted with a device according to one of claims 1 to 9, **characterised in that** the immobilisation of the pedal (1) allows the computer (3) to automatically control the speed of the vehicle.

12. Method for assisting driving according to claim 11, **characterised in that** the computer (3) controls the distance of the vehicle with respect to the vehicle in front.
